# EUROPEAN PATENT SPECIFICATION

(11) **EP 3 221 191 B1**
(45) Date of publication and mention of the grant of the patent: **12.09.2018**
(21) Application number: 15797084.9
(22) Date of filing: 18.11.2015
(51) Int. Cl.: B60R 16/00, B60S 1/08

(54) **CONTROLLER FOR A VEHICLE COMPONENT**
STEUERUNG FÜR EINE FAHRZEUGKOMPONENTE
ORGANE DE COMMANDE D'UN ÉLÉMENT D'UN VÉHICULE

(30) Priority: 19.11.2014 GB 201420551
(43) Date of publication of application: 27.09.2017
(73) Proprietor: Jaguar Land Rover Limited, Coventry, Warwickshire CV3 4LF (GB)
(72) Inventor: TALBOT, Kevin, Coventry Warwickshire CV3 4LF (GB)
(74) Representative: HGF Limited
(86) International application number: PCT/EP2015/076946
(87) International publication number: WO 2016/079172

(56) References cited:
- EP-A1- 1 762 421
- DE-A1- 19 537 296
- US-A- 4 492 904
- US-A- 4 578 591
- US-A1- 2007 241 612

## Description

### TECHNICAL FIELD

The present disclosure relates to a controller for a vehicle component. In particular, but not exclusively, aspects of the invention relate to a controller, a window wiper controller and a vehicle.

### BACKGROUND

Vehicle window wipers for wiping, for example, front, rear and side windows of a vehicle, are often controlled by a controller such as a lever stalk attached to the steering column of the vehicle. A driver of the vehicle can selectively choose the operating mode of the window wipers by moving the lever stalk between predefined positions. The operating mode of the window wipers usually includes an "off" mode, wherein the window wipers are docked and do not move, an "intermittent" mode, wherein the window wipers move from and to their docked position with a pause each time they are docked, and a "constant" mode where the window wipers move from and to their docked position substantially without pause. The predefined positions are usually determined by detents into which the lever stalk is moved. Commonly the positions are arranged so that the lever stalk is moved from the off position through the intermittent position to reach the constant position, thus resulting in an intuitive increase in wiper speed as the stalk is moved from the off position. An example of a control circuitry for such vehicle window wipers is described in US 4 578 591. Some lever stalk controllers further offer a "flick" wipe mode in which the wipers perform a single wipe across the window and return to the docked position. The flick wipe may be provided by moving the lever stalk from the off position in a direction opposite or perpendicular to the intermittent position. Unlike the other operating modes, the flick wipe is not initiated by moving the stalk into a detent. Instead, the flick wipe is normally initiated by moving the stalk out of the current detent position and into a momentary or unlatched position from which the stalk, upon release, returns to the previous detent position.

Flick wipes are often required by drivers to remove, for example, unexpected splashes on the window. It is generally accepted that if intermittent mode is selected then splashes on the window are expected and the driver will wait until the next wipe for such splashes to be removed. However, the length of the intermittent mode pause can itself be controlled and as such can be increased to a period of time whereby it is unpleasant for the driver to wait until the next wipe for the splash to be removed. This may result in the driver taking action to move the lever stalk from the intermittent position into the constant position, to achieve a flick wipe, before moving the lever stalk back to the intermittent position. This is inconvenient for the driver and can sometimes result in the wipers wiping more than once, as desired, which might bother the driver. Alternatively, the driver can choose to move the lever stalk through the off position to the flick wipe position and subsequently back to the intermittent position. However, this can result in the driver forgetting to move the stalk back to the original position thus potentially allowing an unwanted build-up of dirt to accumulate on the window that would have been removed by the intermittent wiping.

It is against this background that the invention has been devised. Other aims and advantages of the invention will become apparent from the following description, claims and drawings.

### SUMMARY OF THE INVENTION

Aspects and embodiments of the invention are defined in the appended claims.

According to an aspect of the invention there is provided a controller for a vehicle component, the controller comprising:
a mode selector for selecting one of a set of primary operating modes of the vehicle component;
a control unit arranged to control the operation of the vehicle component in dependence on the selected operating mode;
a detector arranged to detect the presence of a user input to the mode selector;
a timer arranged to begin timing a period when the detected user input is within a qualification input range, and to continue timing the period while the detected user input remains within the qualification input range,
wherein the control unit is arranged to control the operation of the vehicle component according to a secondary operating mode when the period reaches a qualification threshold,
wherein the detector comprises a force detector arranged to detect the presence of a force applied by a user to the mode selector; and
wherein the mode selector is moveable between two or more positions through application of force by the user, and wherein an upper limit of the qualification input range is a force less than the force required to move from one of the two or more positions to another of the two or more positions.

In an embodiment the secondary operating mode of the component is, or is equivalent to, one of the set of primary operating modes of the component.

In an embodiment the force detector is arranged to detect the presence of a force, applied by the user to the mode selector, between an upper limit and a lower limit of the qualification input range. The mode selector may be movable between two or more positions through application of force by a user, wherein an upper limit of the qualification input range is a force less than the force required to move from one of the two or more positions to another of the two or more positions. In an embodiment, the force detector comprises a pressure sensing resistor and/or comprises a potentiometer.

The control unit may be arranged to continue to control the operation of the vehicle component according to the secondary operating mode while the user input remains within the qualification input range.

In an embodiment the vehicle component comprises a window wiper.

In an embodiment the mode selector is a lever stalk positionable on or near a steering column of a host vehicle.

In an embodiment the mode selector is movable between more than two positions each corresponding to one of more than two of the primary operating modes of the vehicle component, wherein the detector is arranged to detect the presence of a user input to the mode selector when the mode selector is in each of the more than two positions. In an alternative embodiment the mode selector is movable between more than two positions each corresponding to one of more than two of the primary operating modes of the vehicle component, wherein the detector is arranged to detect the presence of a user input to the mode selector when the mode selector is in one of the more than two positions.

According to an aspect of the invention there is provided a vehicle comprising:
a component having a set of primary operating modes and a secondary operating mode; and
a controller comprising the features of the controller as defined above,
wherein the controller is arranged to control the operation of the vehicle component.

In an embodiment the secondary operating mode of the component is, or is equivalent to, one of the set of primary operating modes of the component.

The term window is used herein to reference any window or windscreen on a vehicle. For example the term may reference a front window, side window, rear window, and so on, of the vehicle.

### BRIEF DESCRIPTION OF THE DRAWINGS

One or more embodiments of the invention will now be described, by way of example only, with reference to the accompanying drawings, in which:
Figure 1 schematically shows a window wiper controller and detent arrangement according to the prior art;
Figure 2 shows a cross-section through A-A of the detent arrangement of Figure 1;
Figure 3 schematically shows a window wiper controller according to an aspect of the invention;
Figure 4 shows a cross-section through A-A of the detent arrangement of Figure 3;
Figure 5 shows example plots of the position a window wiper controller according to an embodiment of the invention over time;
Figure 6 schematically shows a window wiper controller according to an embodiment of the invention;
Figure 7 schematically shows a circuit for a window wiper controller according to an embodiment of the invention;
Figure 8 shows an example plot of the force exerted on a window wiper controller according to an embodiment of the invention over time; and
Figure 9 shows a side view of a driver in a vehicle according to an embodiment of the invention.

### DETAILED DESCRIPTION

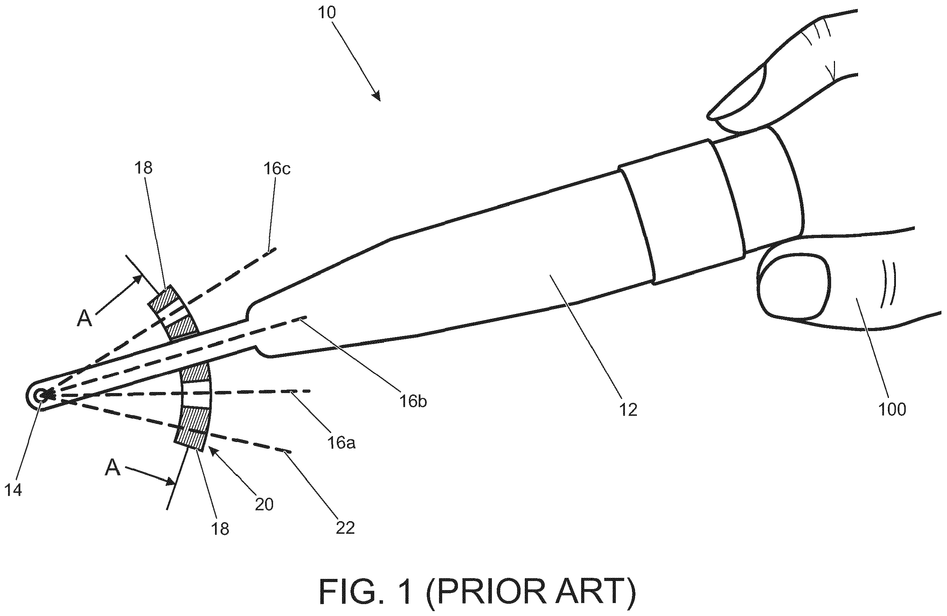

Window wiper controllers such as that shown in Figure 1 are typically used to control the operation of window wipers of a vehicle. The window wiper controller 10 features a lever stalk 12 attached to a point of pivot 14 located on the steering column (not shown) of the vehicle. A driver 100 of the vehicle can move the lever stalk 12 about its pivot 14 into predefined positions 16 determined by detents 18 in a guide 20. Each position is associated with a mode of operation of the window wipers. Typically the modes of operation include 'off', selected by an off position 16a, 'intermittent', selected by an intermittent position 16b, and 'constant', selected by a constant position, 16c. A flick wipe position 22 is provided to initiate a flick wipe, or at least one instance of a constant wipe. The flick wipe position does not have a detent and accordingly release of the lever stalk 12, when in the flick wipe position, returns to the off position.

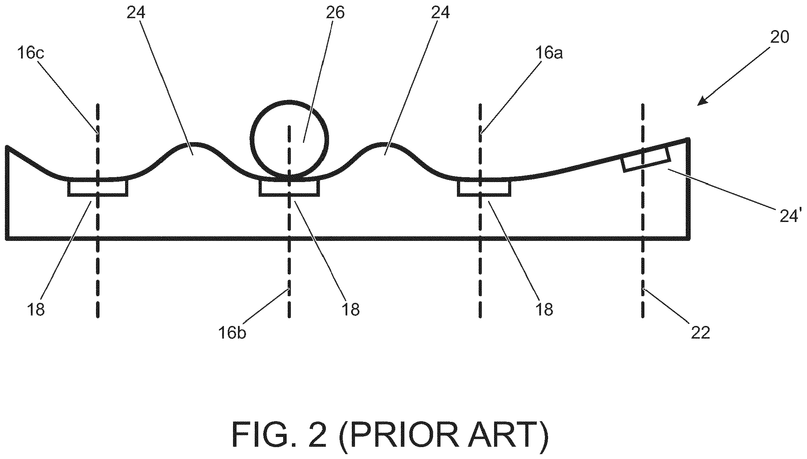

Figure 2 shows a cross-sectional view through the detent guide of Figure 1, taken through the line A-A as shown in Figure 1. The guide 20 is shown to have detents 18 divided by ridges 24 over which a shaft 26 of the lever stalk 12 can pass. When positioned in a detent, a sensor, or equivalent, detects the presence of the shaft 26 and passes a signal to a control unit (not shown), which operates the window wipers. The flick wipe position 22 is shown to be positioned on part of a ridge 24'. The shaft is biased toward the guide so that, as described above, release of the lever stalk when in the flick wipe position 22 results in the shaft returning to the off position 16a by moving off the ridge 24'.

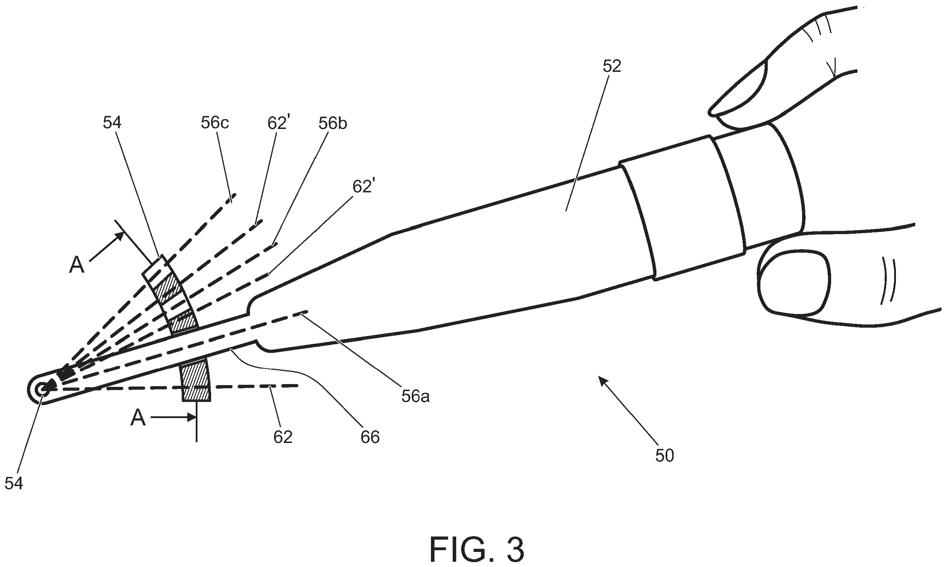

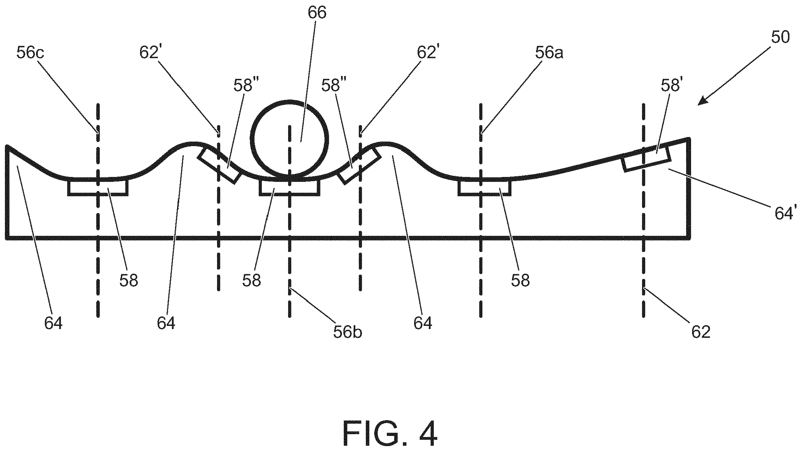

Figures 3 to 9 show embodiments according to aspects of the present invention. Figure 3 shows a lever stalk 52 and detent guide 50 for selecting a mode of operation of window wipers of a vehicle. However, the lever stalk may be used to control other features, as discussed below. The stalk 52 can be moved into predefined positions determined by the detent guide (see Figure 4) to select the mode of operation of the wipers. The positions comprise an off position 56a, an intermittent position 56b and a constant position 56c. The off position is used to select an off mode, which docks the window wipers so they do not move. The intermittent position is used to select an intermittent mode, which is used to move the window wipers from and to their docked position with a pause each time they are docked. The constant position is used to select a constant mode, which is used to move the window wipers from and to their docked position without pause. A flick wipe position 62 is also provided by the detent guide. The flick wipe position is used to initiate at least one instance of a constant wipe, or similar, so that if the lever stalk remains in the flick wipe position the wiper will operate similar or equivalent to its operation under the constant mode. The positions are arranged so that the lever stalk is moved from the off position 56a through the intermittent position 56b to reach the constant position 56c. The flick wipe position 62 is provided, from the off position 56a, in the opposite direction to the intermittent position 56b. This is so that the driver can initiate one or more flick wipes from the off position without having to change the mode of operation of the window wipers.

Figure 4 shows a cross-sectional view through the detent guide 50 of Figure 3, which provides positions for the lever stalk controller to be moved into. A shaft 66 of the lever stalk is movable over ridges 64 provided between at least some of the positions 56a, 56b, 56c. The shaft 66 is biased toward the detent guide so that the shaft is retained between the ridges 64 in one of the positions as selected by a driver moving the lever stalk. The flick wipe position 62 is provided on a part ridge 64' so that release of the lever stalk from the flick wipe position results in the lever stalk returning to the off position 56a. Sensors 58 are provided at each position to detect the presence of the shaft 66 of the lever stalk. The flick wipe position sensor 58' is provided on the part ridge 64'. In alternative arrangements, a potentiometer is used to determine the position of the lever stalk.

In an example embodiment, at least one further flick wipe position 62' is provided on the off, constant, or both sides of the intermittent position 56b. A flick wipe position sensor 58" is provided at the at least one further flick wipe positions 62' to detect the presence of the shaft 66 of the lever stalk in the at least one further flick wipe position 62'. In some embodiments, the potentiometer is used to determine the position of the lever stalk in the at least one further flick wipe position. The further flick wipe position is particularly advantageous to drivers who want to initiate a flick wipe from the intermittent position 56b. This may be the case when, for example, it is raining lightly so the driver has the wipers operating intermittently. The pause of the intermittent wipe can be adjusted using controls outside the scope of this invention. However, in conditions where the rain is light, it is common for the driver to extend the pause time as much as possible. The pause may thus be two or more seconds. Once set, the driver is content that the light rain is being cleared. However, from time to time, the driver's window may be splashed by other vehicles driving through nearby puddles, for example. In the absence of the further flick wipe positions 62', the driver is then faced with having to wait for the next intermittent wipe, change to constant mode, or pass through off to reach the flick wipe position 62. In any case, there is inconvenience for the driver. In the presence of at least one of the further flick wipe positions 62', the driver is able to initiate a flick wipe from the intermittent position 56b without having to move into the off or constant positions 56a, 56c. Furthermore, release of the lever stalk from the further flick wipe position 62'causes the shaft 66 of the lever stalk to return to the intermittent position 56b thus limiting the burden on the driver to reselect the mode the window wipers were in prior to the initiation of the flick wipe.

In example embodiments, the further flick wipe as previously described is initiated following determination that the driver wishes to initiate the further flick wipe. This is performed by monitoring in part the position of the lever stalk over time. A controller monitors the input from the further flick wipe sensor to determine the presence of the lever stalk over the sensor region. On receiving an input from the sensor indicative of the lever stalk being over the sensor, a timer begins. When the timer reaches a qualification threshold, or a qualification period has elapsed, the controller initiates a flick wipe. The qualification period is preferably in the range of 50 to 200ms. Other periods may be useful. The qualification period should not be too short that a flick wipe is initiated as the driver is moving the lever stalk from the intermittent position to the off or constant positions, and should not be too long that the driver does not feel they get an immediate response as desired by the flick wipe.

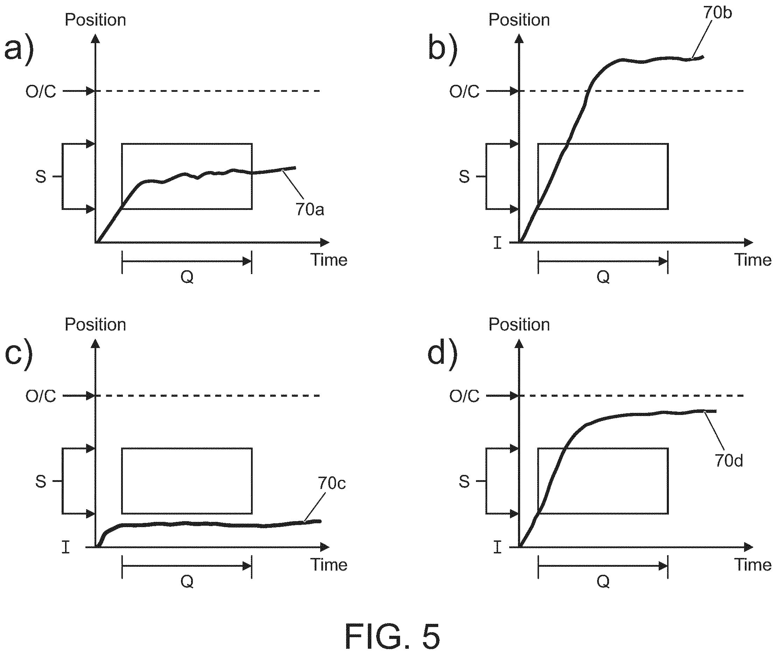

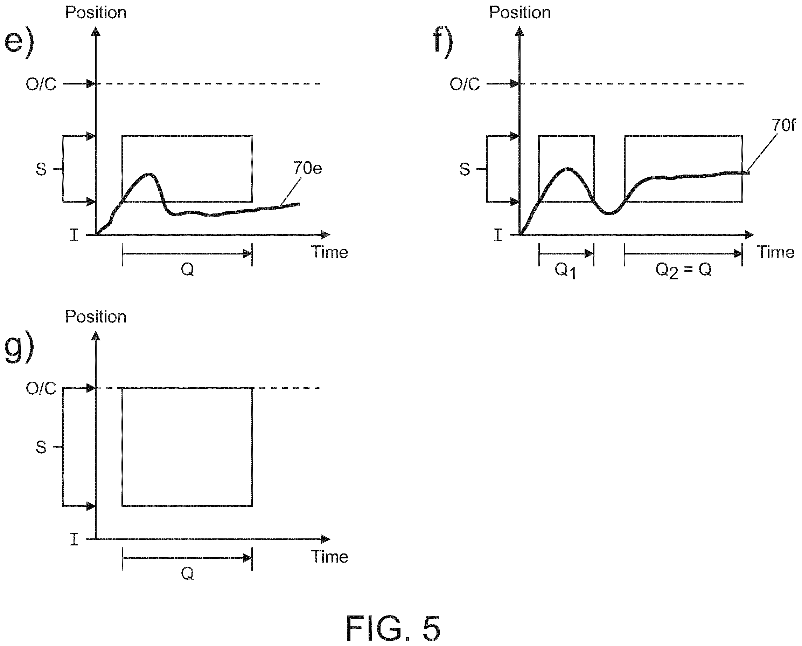

Figures 5 shows some example plots of the lever stalk position 70 over time. Each plot begins with the lever stalk at the zero position, equivalent in this example to the intermittent position I. The sensor region S is illustrative of the region between the intermittent position I and the off or constant position O/C that is occupied by the further flick wipe sensor.

Figure 5a) shows the lever stalk being moved from the intermittent position I to the sensor region S. As the lever stalk enters the sensor region, the timer begins. As shown by the lever stalk position 70a, the lever stalk remains in the sensor region for the duration of the qualification period Q and thus a flick wipe is initiated.

Figure 5b) shows the lever stalk entering the sensor region S and the timer beginning. However, the lever stalk is moved out of the sensor region before the qualification period Q elapses, as demonstrated by the lever stalk position 70b, which also shows the lever stalk being moved to the off or constant position. In this example, the flick wipe is not initiated because the driver was not wishing to initiate a flick wipe but was instead moving the lever stalk to the off or constant position.

Figure 5c) shows the lever stalk position 70c where the lever stalk is moved away from the intermittent position I but does not enter the sensor region S. This situation might occur due to noise on the lever stalk or the lever stalk position moving slightly over time due to wear. As the lever stalk position 70c does not enter the sensor region C, the timer is not started.

Figure 5d) shows the lever stalk position 70d where the lever stalk is moved into and out of the sensor region before the qualification time Q has elapsed. The position reached by the lever stalk is outside of the sensor region but not as far as the off or constant positions. The position may be the top of the ridge 64 meaning that release of the lever stalk from this position 70d will result in the lever stalk moving back to the intermittent position or on to the off or constant positions.

Figure 5e) shows the lever stalk position 70e as entering the sensor region S and leaving the sensor region S toward the intermittent position I before the qualification period Q has elapsed. This scenario is likely to result from the driver accidently touching the lever stalk and does not elicit initiation of the wiper.

Figure 5f) shows the lever stalk position 70f as entering the sensor region S and leaving, as in Figure 5e), before re-entering the sensor region. The timer begins on when the lever stalk first enters the sensor region and stops when the lever stalks leaves the first region. The period of time elapsed Q1 is insufficient to trigger the initiation of a flick wipe. However, on re-entry to the sensor region, the timer begins again and a period of time Q2 elapses so that the qualification period is reached and a flick wipe is initiated.

Figure 5f) also illustrates how the timer stops when the lever stalk leaves the sensor region. Figures 5b), 5d) and 5e) can be drawn in this way but remain as shown to demonstrate that the qualification period is not reached. The area defined, on the plots of Figure 5, by the sensor region S and the qualification period Q may be termed the qualification zone. The position of the lever stalk may vary within the qualification zone without effect on reaching the qualification period. This is advantageous because it is unlikely that the driver will be able to hold the lever stalk still for the duration of the qualification period Q. The size of the sensor region may vary so that it extends from near to the intermittent position up or near to the off or constant position. This has the advantage that the driver has a wider region to move the lever stalk into in order to initiate a flick wipe.

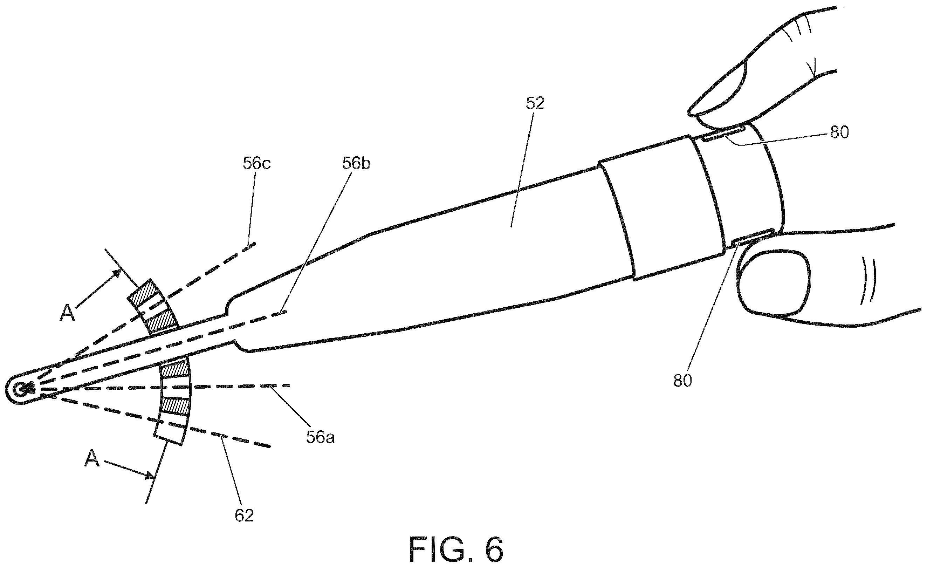

In an example embodiment, shown in Figure 6, the further flick wipe is initiated by applying a force to a force sensitive sensor positioned at one or both of the top or bottom of the lever stalk 52. The window wiper modes are selected by moving the lever stalk into one of the mode positions 56a, 56b, 56c as described in relation to Figure 3. The flick wipe position 62 may be provided as per Figure 3 but may alternatively be provided as per the further flick wipe using the force sensitive sensor. Similarly, where embodiments use a potentiometer to determine the position of the lever stalk, a biased lever stalk results in the potentiometer effectively measuring force applied to the lever stalk.

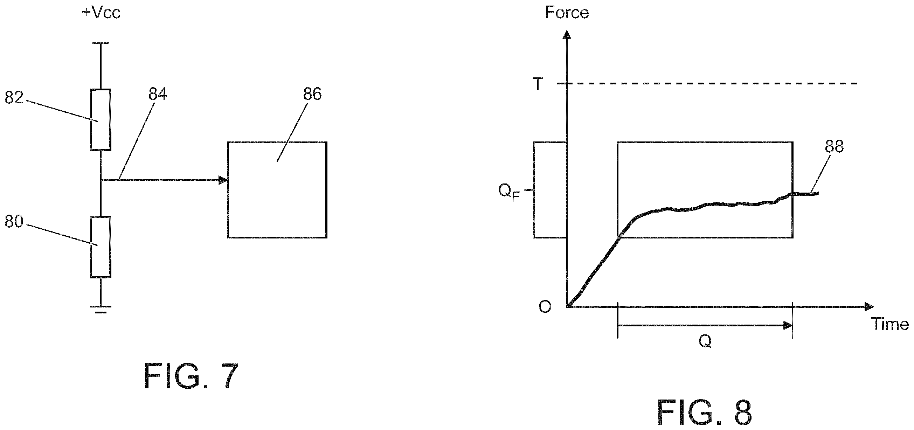

In an example embodiment, the force sensitive sensor is a pressure sensing resistor 80, which changes resistance in dependence on the force applied to it. Figure 7 shows an example circuit for determining that the pressure sensing resistor 80 is being touched. The pressure sensing resistor is connected between ground and a pull-up resistor 82, which is in turn connected to a Vcc supply, for example +5V. An output 84 is taken between the pull-up resistor 82 and the pressure sensing resistor 80 and passed to a microcontroller 86. The pull-up resistor value is matched to provide a voltage readable by the processor and may, for example, be in the range 1k-5kΩ. When the driver presses the pressure sensing resistor 80, the voltage at the output changes and the microcontroller accordingly determines that the pressure sensing resistor 80 has been pressed. A force between a minimum and maximum level is required for the microcontroller to determine that the pressure sensing resistor has been pressed.

The microcontroller regularly samples the output 84. This may be, for example, every 10ms. When the output is indicative of the pressure sensing resistor 80 having been pressed, a counter, or timer, begins counting. Similarly to Figure 5, a qualification period is used to determine that the driver intended to initiate a flick wipe. For example, if the qualification period is 200ms then the counter must reach 20 consecutive counts of the output indicating that the pressure sensing resistor is being pressed. Figure 8 illustrates an equivalent plot to Figure 5a for the pressure sensing resistor. The plot illustrates force applied to the lever stalk versus time. A threshold force T is provided where the lever stalk will be consequently moved to one of the off or constant positions. A qualification force Q_{F} is provided between a minimum and maximum force value required to indicate that the pressure sensing resistor has been pressed. A force applied 88 to the pressure sensing resistor is shown to reach the minimum force value for the qualification force Q_{F} and thus begin a counter. The applied force 88 remains within the upper and lower limits of the qualification force Q_{F} for the duration of the qualification period, which is for example equal to 20 counts. As a result, the microcontroller initiates a flick wipe. The example plots provided in Figures 5a) to 5f) may be applied similarly to the pressure sensing resistor example. As per Figure 5f), if the applied force goes outside the limits, the count is cleared and counting only restarts when the force is within the qualification force Q_{F}.

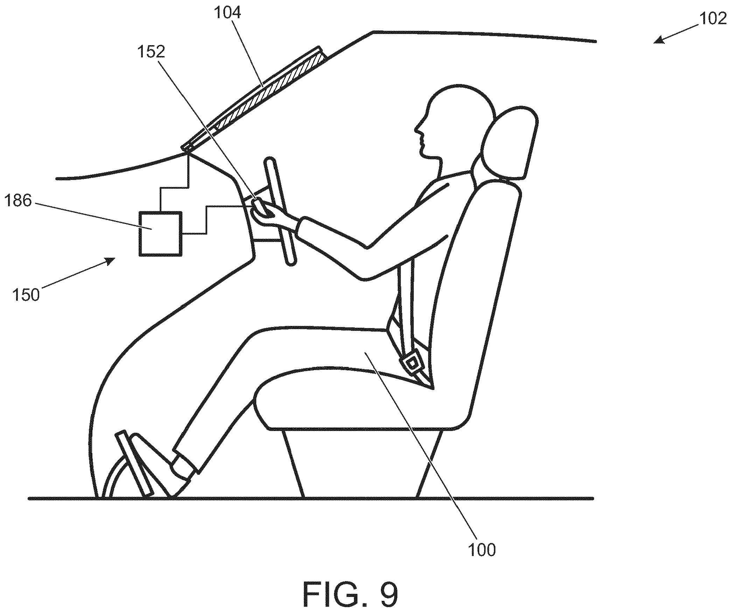

Figure 9 shows a side view of a driver 100 in a vehicle 102 comprising a window wiper 104 and a window wiper controller 150 according to any of the aforementioned examples. The driver is able to operate the window wiper controller via a lever stalk 152, which passes a signal to a controller or microcontroller 186. The controller operates the window wiper 104 in dependence on the driver input to the lever stalk as hereinbefore described.

## Claims

1. A controller for a vehicle component, the controller comprising:
a mode selector for selecting one of a set of primary operating modes of the vehicle component;
a control unit arranged to control the operation of the vehicle component in dependence on the selected operating mode;
a detector arranged to detect the presence of a user input to the mode selector;
a timer arranged to begin timing a period when the detected user input is within a qualification input range, and to continue timing the period while the detected user input remains within the qualification input range,
wherein the control unit is arranged to control the operation of the vehicle component according to a secondary operating mode when the period reaches a qualification threshold,
wherein the detector comprises a force detector arranged to detect the presence of a force applied by a user to the mode selector; and
wherein the mode selector is moveable between two or more positions through application of force by the user, and wherein an upper limit of the qualification input range is a force less than the force required to move from one of the two or more positions to another of the two or more positions.

2. A controller as claimed in claim 1 for a vehicle component, wherein the secondary operating mode of the component is, or is equivalent to, one of the set of primary operating modes of the component.

3. A controller as claimed in claim 1 or 2, wherein the force detector is arranged to detect the presence of a force, applied by the user to the mode selector, between an upper limit and a lower limit of the qualification input range.

4. A controller as claimed in any preceding claim wherein the force detector comprises a pressure sensing resistor.

5. A controller as claimed in any preceding claim wherein the force detector comprises a potentiometer.

6. A controller as claimed in any preceding claim for a vehicle component wherein the control unit is arranged to continue to control the operation of the vehicle component according to the secondary operating mode while the user input remains within the qualification input range.

7. A controller as claimed in any preceding claim for a vehicle component wherein the vehicle component comprises a window wiper.

8. A controller as claimed in any preceding claim wherein the mode selector is a lever stalk positionable on or near a steering column of a host vehicle.

9. A controller as claimed in any preceding claim for a vehicle component, wherein the mode selector is movable between more than two positions each corresponding to one of more than two of the primary operating modes of the vehicle component, wherein the detector is arranged to detect the presence of a user input to the mode selector when the mode selector is in each of the more than two positions.

10. A controller as claimed in any of claims 1 to 8 for a vehicle component, wherein the mode selector is movable between more than two positions each corresponding to one of more than two of the primary operating modes of the vehicle component, wherein the detector is arranged to detect the presence of a user input to the mode selector when the mode selector is in one of the more than two positions.

11. A vehicle comprising:
a vehicle component having a set of primary operating modes and a secondary operating mode; and
a controller comprising the features of the controller as claimed in any one of claims 1 to 10,
wherein the controller is arranged to control the operation of the vehicle component.

12. A vehicle as claimed in claim 11, wherein the secondary operating mode of the component is, or is equivalent to, one of the set of primary operating modes of the component.

## Patentansprüche

1. Steuervorrichtung für eine Fahrzeugkomponente, wobei die Steuervorrichtung Folgendes umfasst:
einen Modusschalter zum Auswählen eines aus einem Satz von primären Betriebsmodi der Fahrzeugkomponente;
eine Steuereinheit, die angeordnet ist, den Betrieb der Fahrzeugkomponente abhängig von dem ausgewählten Betriebsmodus zu steuern;
einen Detektor, der angeordnet ist, das Vorliegen einer Benutzereingabe in den Modusschalter zu erfassen; einen Zeitgeber, der angeordnet ist, mit einer Zeitmessung eines Zeitraums zu beginnen, wenn die erfasste Benutzereingabe sich in einem Qualifikationseingabebereich befindet, und mit der Zeitmessung des Zeitraums fortzufahren, während die erfasste Benutzereingabe in dem Qualifikationseingabebereich bleibt,
wobei die Steuereinheit angeordnet ist, den Betrieb der Fahrzeugkomponente gemäß einem sekundären Betriebsmodus zu steuern, wenn der Zeitraum einen Qualifikationsschwellenwert erreicht, wobei der Detektor einen Kraftdetektor umfasst, der angeordnet ist, das Vorliegen einer durch einen Benutzer auf den Modusschalter aufgebrachten Kraft zu erfassen; und
wobei der Modusschalter durch Aufbringen von Kraft durch den Benutzer zwischen zwei oder mehr Stellungen bewegbar ist und wobei eine Obergrenze des Qualifikationseingabebereichs eine Kraft ist, die geringer als die Kraft ist, die erforderlich ist, sich von einer der zwei oder mehr Stellungen in eine andere der zwei oder mehr Stellungen zu bewegen.

2. Steuervorrichtung nach Anspruch 1 für eine Fahrzeugkomponente, wobei der sekundäre Betriebsmodus der Komponente einer aus dem Satz von primären Betriebsmodi der Komponente ist oder diesem entspricht.

3. Steuervorrichtung nach Anspruch 1 oder 2, wobei der Kraftdetektor angeordnet ist, das Vorliegen einer Kraft, die durch den Benutzer auf den Modusschalter aufgebracht wird, zwischen einer Obergrenze und einer Untergrenze des Qualifikationseingabebereichs zu erfassen.

4. Steuervorrichtung nach einem der vorhergehenden Ansprüche, wobei der Kraftdetektor einen Druckmesswiderstand umfasst.

5. Steuervorrichtung nach einem der vorhergehenden Ansprüche, wobei der Kraftdetektor ein Potentiometer umfasst.

6. Steuervorrichtung nach einem der vorhergehenden Ansprüche für eine Fahrzeugkomponente, wobei die Steuereinheit angeordnet ist, das Steuern des Betriebs der Fahrzeugkomponente gemäß dem sekundären Betriebsmodus fortzusetzen, während die Benutzereingabe innerhalb des Qualifikationseingabebereichs bleibt.

7. Steuervorrichtung nach einem der vorhergehenden Ansprüche für eine Fahrzeugkomponente, wobei die Fahrzeugkomponente einen Scheibenwischer umfasst.

8. Steuervorrichtung nach einem der vorhergehenden Ansprüche, wobei der Modusschalter ein Betätigungshebel ist, der auf oder nahe einer Lenksäule eines Host-Fahrzeugs positionierbar ist.

9. Steuervorrichtung nach einem der vorhergehenden Ansprüche für eine Fahrzeugkomponente, wobei der Modusschalter zwischen mehr als zwei Stellungen bewegbar ist, die jeweils einem von mehr als zwei der primären Betriebsmodi der Fahrzeugkomponente entsprechen, wobei der Detektor angeordnet ist, das Vorliegen einer Benutzereingabe in den Modusschalter zu erfassen, wenn sich der Modusschalter in jeder der mehr als zwei Stellungen befindet.

10. Steuervorrichtung nach einem der Ansprüche 1 bis 8 für eine Fahrzeugkomponente, wobei der Modusschalter zwischen mehr als zwei Stellungen bewegbar ist, die jeweils einem von mehr als zwei der primären Betriebsmodi der Fahrzeugkomponente entsprechen, wobei der Detektor angeordnet ist, das Vorliegen einer Benutzereingabe in den Modusschalter zu erfassen, wenn sich der Modusschalter in einer der mehr als zwei Stellungen befindet.

11. Fahrzeug, Folgendes umfassend:
eine Fahrzeugkomponente mit einem Satz von primären Betriebsmodi und einem sekundären Betriebsmodus; und
eine Steuervorrichtung, die die Merkmale der Steuervorrichtung nach einem der Ansprüche 1 bis 10 umfasst,
wobei die Steuervorrichtung angeordnet ist, den Betrieb der Fahrzeugkomponente zu steuern.

12. Fahrzeug nach Anspruch 11, wobei der sekundäre Betriebsmodus der Komponente einer aus dem Satz von primären Betriebsmodi der Komponente ist oder diesem entspricht.

## Revendications

1. Dispositif de commande pour un composant de véhicule, le dispositif de commande comprenant :
un sélecteur de mode pour sélectionner l'un d'un ensemble de modes de fonctionnement primaires du composant de véhicule ;
une unité de commande agencée pour commander le fonctionnement du composant de véhicule selon le mode de fonctionnement sélectionné ;
un détecteur agencé pour détecter la présence d'une entrée utilisateur dans le sélecteur de mode ;
un minuteur agencé pour débuter le minutage d'une période lorsque l'entrée utilisateur détectée est dans une plage d'entrée de qualification, et pour continuer le minutage de la période tandis que l'entrée utilisateur détectée reste dans la plage d'entrée de qualification,
dans lequel l'unité de commande est agencée pour commander le fonctionnement du composant de véhicule selon un mode de fonctionnement secondaire lorsque la période atteint un seuil de qualification,
dans lequel le détecteur comprend un détecteur de force agencé pour détecter la présence d'une force appliquée par un utilisateur au sélecteur de mode ; et
dans lequel le sélecteur de mode est mobile entre deux positions ou plus par l'application d'une force par l'utilisateur, et dans lequel une limite supérieure de la plage d'entrée de qualification est une force inférieure à la force requise pour se déplacer de l'une des deux positions ou plus à l'autre des deux positions ou plus.

2. Dispositif de commande selon la revendication 1 pour un composant de véhicule, dans lequel le mode de fonctionnement secondaire du composant est, ou est équivalent à, l'un de l'ensemble de modes de fonctionnement primaires du composant.

3. Dispositif de commande selon la revendication 1 ou 2, dans lequel le détecteur de force est agencé pour détecter la présence d'une force, appliquée par l'utilisateur au sélecteur de mode, entre une limite supérieure et une limite inférieure de la plage d'entrée de qualification.

4. Dispositif de commande selon l'une quelconque des revendications précédentes, dans lequel le détecteur de force comprend un résistor de détection de pression.

5. Dispositif de commande selon l'une quelconque des revendications précédentes, dans lequel le détecteur de force comprend un potentiomètre.

6. Dispositif de commande selon l'une quelconque des revendications précédentes pour un composant de véhicule, dans lequel l'unité de commande est agencée pour poursuivre la commande du fonctionnement du composant de véhicule selon le mode de fonctionnement secondaire tandis que l'entrée utilisateur reste au sein de la plage d'entrée de qualification.

7. Dispositif de commande selon l'une quelconque des revendications précédentes pour un composant de véhicule, dans lequel le composant de véhicule comprend un essuie-glace.

8. Dispositif de commande selon l'une quelconque des revendications précédentes, dans lequel le sélecteur de mode est une tige de levier positionnable sur ou près d'une colonne de direction d'un véhicule hôte.

9. Dispositif de commande selon l'une quelconque des revendications précédentes pour un composant de véhicule, dans lequel le sélecteur de mode est mobile entre plus de deux positions correspondant chacune à l'un de plus de deux des modes de fonctionnement primaires du composant de véhicule, dans lequel le détecteur est agencé pour détecter la présence d'une entrée utilisateur dans le sélecteur de mode lorsque le sélecteur de mode est dans chacune des plus de deux positions.

10. Dispositif de commande selon l'une quelconque des revendications 1 à 8 pour un composant de véhicule, dans lequel le sélecteur de mode est mobile entre plus de deux positions correspondant chacune à l'un de plus de deux des modes de fonctionnement primaires du composant de véhicule, dans lequel le détecteur est agencé pour détecter la présence d'une entrée utilisateur dans le sélecteur de mode lorsque le sélecteur de mode est dans l'une des plus de deux positions.

11. Véhicule comprenant :
un composant de véhicule ayant un ensemble de modes de fonctionnement primaires et un mode de fonctionnement secondaire ; et
un dispositif de commande comprenant les particularités du dispositif de commande tel que revendiqué dans l'une quelconque des revendications 1 à 10,
dans lequel le dispositif de commande est agencé pour commander le fonctionnement du composant de véhicule.

12. Véhicule selon la revendication 11, dans lequel le mode de fonctionnement secondaire du composant est, ou est équivalent à, l'un de l'ensemble de modes de fonctionnement primaires du composant.
